# EUROPEAN PATENT APPLICATION

(11) **EP 4 345 123 A1**
(43) Date of publication of application: **03.04.2024**
(21) Application number: 23193984.4
(22) Date of filing: 29.08.2023
(51) Int. Cl.: C08J 9/18, B29C 44/34, C08J 9/14

(54) **METHOD FOR PREPARING EXPANDABLE POLYSTYRENE BEADS**

(30) Priority: 29.09.2022 NL 2033188
(71) Applicant: Unipol Holland B.V., 5347 KL Oss (NL)
(72) Inventor: NEIJMAN, Eric Wilhelmus Johannes Frederik, OSS (NL)
(74) Representative: Algemeen Octrooi- en Merkenbureau B.V.

(57) **Abstract**

The present invention relates to a method for preparing expandable polystyrene beads and to expandable polystyrene beads thus obtained. The present invention furthermore relates to the use of such expandable recycled polystyrene beads and to a polystyrene foam structure. An object of the present invention is to provide a method for using recycled polystyrene particles.

## Description

The present invention relates to a method for preparing expandable polystyrene beads and to recycled expandable polystyrene beads thus obtained. The present invention furthermore relates to the use of such expandable recycled polystyrene beads and to a polystyrene foam structure.

Methods for preparing expandable polystyrene beads are well known in the art.

For example, Korean patent application KR20160056126 discloses a method for producing small expandable polystyrene beads using large seed particles, the method comprises the steps of preparing an aqueous dispersion which selectively contains large polystyrene-type seed particles, a dispersant, a chain transfer agent and a surfactant, adding thereto a styrene-type monomer in which an initiator and a chain transfer agent are dissolved, to expand the large seed particles and performing polymerization of the monomer while splitting the large seed particle into two or more small particles, and adding a blowing agent thereto, to obtain a spherical particle smaller than the large seed particle.

EP 0 000 572 discloses a process for the production of spherical, expandable styrene polymers by polymerization of styrene in the presence of particulate styrene polymer, containing expanding agent, in aqueous suspension, the process comprises the steps of impregnating a styrene polymer containing expanding agent and having a particle size between 0.1 and 5 mm with 10 to 100% by weight (based on the polymer containing expanding agent) for 0.5 to 5 hours in aqueous suspension at temperatures between 0 and 75 degrees C, and then polymerizing the styrene absorbed in the styrene polymer particles in the aqueous suspension at temperatures between 90 and 140 degrees C in the presence of 0.01 to 1% by weight (based on the styrene) of an organic peroxide.

EP 1 148 088 discloses a process for preparing beads of expandable polystyrene by suspension polymerization comprising the steps of introducing a reaction mixture comprising styrene monomer into a reaction vessel, heating the reaction mixture to attain polymerization temperature, prior to attaining the polymerization temperature, adding to the reaction mixture about 500 parts per million by weight based on styrene, of a low-molecular weight polyethylene material having a molecular weight of around 2000, reacting the styrene containing the polyethylene to form polystyrene beads, separating the polystyrene beads from the reaction mixture; and impregnating the beads with a pentane, isopentane, inert gas or any combination thereof as a blowing agent.

KR 2009 0052433 relates to a method for producing expandable polystyrene of which foam can be made with a cell size of 0.01 to 0.05 mm using a regenerated styrene-based resin, the method consisting of the steps of preparing a mixed composition by mixing carbon particles with a styrenic resin containing a foaming agent, extruding the mixed composition, and impregnating the extruded mixed composition with a foaming agent at a temperature of 100 °C, wherein, after adding a dispersant and an emulsifier to the extruded mixed composition, the temperature is raised to 85 to 100° C. and impregnated with a foaming agent.

CN 113 372 606 relates to a method for manufacturing expandable polystyrene beads by a polystyrene recycling solvent method comprising the steps of dissolution of polystyrene return materials, namely dissolving and filtering the polystyrene return materials by acetate solvents to obtain polystyrene solutions, preparation of polystyrene beads, i.e. the polystyrene solution thus obtained is made into polystyrene beads, and the preparation of expandable polystyrene beads, i.e. the polystyrene beads thus obtained are made into expandable polystyrene beads.

Expandable polystyrene (EPS) is made on a large scale via a suspension polymerization process. In such a process droplets of styrene are suspended in water and converted into polystyrene where a phase transition occurs from liquid (styrene) to solid (polystyrene granules). During the suspension polymerization process a blowing agent is added and incorporated homogenously throughout the styrene/polystyrene droplet. The viscosity of this styrene/polystyrene droplet is low enough to absorb the blowing agent in a brief time. The thus prepared polystyrene granules have a variable size, namely there a particle size distribution. Each fraction of this particle size distribution has its own field of application in the market. It is therefore important in the production process to prevent disturbances in the particle size distribution.

In practice small sized polystyrene granules, namely recycled polystyrene granules, may be added at the beginning of the suspension polymerization process. The amount of recycled polystyrene that can be added to the suspension polymerization process is limited. Thus, the applicability of such recycled polystyrene, where recycled polystyrene granules are added at the beginning of the suspension polymerization process, is therefore limited.

The present inventor found that the use of specific materials, for example recycled polystyrene, may disrupt the functionality of surfactants in the process. As a result, the particle size distribution may deviate significantly from the usual particle size distribution or, in fact, the suspension is no longer maintained, and the process is no longer under control.

During the polymerization process, where styrene is converted to polystyrene, the viscosity of the styrene droplet will increase, which has an effect on the particle size distribution. Materials that increase the viscosity of the styrene droplet will therefore also have an influence on the particle size distribution and, in the worst case, can make the process uncontrollable. The addition of polystyrene during the polymerization process of styrene will also increase the viscosity of the styrene droplet.

The present inventors found that if recycled polystyrene is used for the production of expandable polystyrene, a large variability in the viscosity of this material or the presence of surfactants will certainly influence the polymerization process, especially with regards to the particle size distribution.

An object of the present invention is to provide a method for using recycled polystyrene particles.

Another object of the present invention is to use recycled polystyrene particles for the production of spherical, expandable styrene polymers.

Another object of the present invention is to use recycled polystyrene particles for the production of a homogenous foam structure.

The present invention thus relates to a method for preparing expandable polystyrene beads, wherein the method comprises the following steps:
a) providing recycled polystyrene granulates;
b) impregnating in an aqueous environment the granulates of step a) with a blowing agent in a suspension reactor, wherein the impregnation step is carried out in several phases, the phases comprising one or more warming up phases, isotherm phases and cooling down phases;
c) recovering the expandable recycled polystyrene beads from the reactor, wherein the recycled polystyrene granulates of step a) have a D50 (mm) in a range of 0,7 - 2 mm.

On basis of the above method one or more objects are achieved. In contrast to the standard process for preparing expandable polystyrene beads in which the polystyrene granules are formed during the polymerization process, there are now solid granules of recycled polystyrene. In this case, the particle size distribution is already set. Variation in particle size distribution and problems of uncontrollability of the process will occur less, provided this suspension is also well stabilized. According to the invention the recycled polystyrene granules are impregnated in an aqueous suspension with a blowing agent, such as pentane.

In an example the blowing agent is supplied to the reactor during the isotherm phase.

In an example the temperature range of the isotherm phase is in a range of 90 -130 degree Celsius.

In an example the impregnation step comprises a first warming up phase, followed by a first isotherm phase, followed by a second warming up phase, followed by a second isotherm phase and a cooling down phase, wherein the temperature of the second isotherm phase is higher than the temperature of the first isotherm phase.

In an example the blowing agent is supplied to the reactor during the first isotherm phase and/or the second isotherm phase.

In an example the temperature range of the first isotherm phase is about 90 - 110 degree Celsius.

In an example the temperature range of the second isotherm phase is about 110 - 130 degree Celsius, wherein the temperature of the second isotherm phase is higher than the temperature of the first isotherm phase. In an example the temperature range of the isotherm phase is in a range of 115 -125 degree Celsius.

In another example the impregnation step comprises a warming up phase, followed by an isotherm phase, and a cooling down phase, wherein the temperature range of the isotherm phase is, for example, in a range of 115 -125 degree Celsius.

In an example the impregnation step is carried out in the presence of one or more auxiliaries chosen from the group of surface active agents, antistatics, emulsion stabilizers, flame retardants and viscosity regulating agents.

In an example the recycled polystyrene granulates of step a) have a D50 (mm) in a range of 1,0 - 1,8 mm. The D50 value is measured via Image Analysis. It concerns a "Dynamic Particle Image Analysis" with a device called "Camsizer" from the company Microtrac Inc.

In an example the recycled polystyrene granulates of step a) have a Mw in a range of 15-25 10⁴ g/mol.

The present invention also relates to expandable recycled polystyrene beads obtained according to a method as discussed above wherein the expandable recycled polystyrene beads have a ratio LID (length/diameter) of < 0,98, in particular < 0,96.

In an example the expandable recycled polystyrene beads comprise one or more auxiliaries chosen from the group of surface active agents, emulsion stabilizers, flame retardants, antistatics and viscosity regulating agents homogeneously distributed through the beads.

The present invention also relates to the use of expandable recycled polystyrene beads obtained according to a method as discussed above or to the use of expandable recycled polystyrene beads as discussed above in a moulding process for manufacturing a polystyrene foam structure.

The present invention also relates to a polystyrene foam structure comprising expanded recycled polystyrene beads obtained according to a method as discussed above or to expandable recycled polystyrene beads as discussed above.

The present inventors also found that in step a) a mixture of recycled polystyrene granulates, and poly(p-phenylene oxide) can be used. The total amount of poly(p-phenylene oxide) in such a mixture can be up to 30 wt.%. The temperature of the second isotherm phase in the impregnation phase b) of such a mixture of recycled polystyrene granulates and poly(p-phenylene oxide) is in a range of 125 - 135 degC.

These and other objects and features of the present invention will become more fully apparent from the following description and appended claims or may be learned by the practice of the invention as set forth hereinafter.

### Comparative example 1

At room temperature, in a stainless steel reactor, 13500 g of demineralised water was added to the reactor with 4500 g of recycled polystyrene granulate (D50 of 3-4 mm). An amount of 108 g of tricalcium phosphate was added and 1.6 g of Nacconol (trademark, Stepan Company). The reactor was stirred and heated to 100 degC in 2 hours and maintained at this temperature for 2 hours. In intervals of about 10 minutes 225 g of pentane was added during the 100 degC plateau. Then the reactor was heated in 30 minutes to 115 degC. This temperature was maintained for 3 hours.

The reactor was cooled down to ambient temperature in 200 minutes and the product was recovered from the reactor. When expanded this material did not have a homogenous cell structure. This experiment is identified as FPB465.

### Comparative example 2

At room temperature, in a stainless steel reactor, 13500 g of demineralised water was added to the reactor with 4500 g of recycled polystyrene granulate (D50 of 3-4 mm). An amount of 108 g of tricalcium phosphate was added and 1.6 g of Nacconol (trademark, Stepan Company). The reactor was stirred and heated to 100 degC in 2 hours and maintained at this temperature for 2 hours. In intervals of about 10 minutes 225 g of pentane was added during the 100 degC plateau. Then the reactor was heated in 45 minutes to 122 degC. This temperature was maintained for 4 hours.

The reactor was cooled down to ambient temperature in 200 minutes and the product was recovered from the reactor. When expanded this material did not have a homogenous cell structure. This experiment is identified as FPB477.

### Comparative example 3

At room temperature, in a stainless steel reactor, 13500 g of demineralised water was added to the reactor with 4500 g of recycled polystyrene granulate (D50 of 3-4 mm). An amount of 108 g of tricalcium phosphate was added and 1.6 g of Nacconol (trademark, Stepan Company). The reactor was stirred and heated to 100 degC in 2 hours and maintained at this temperature for 2 hours. In intervals of about 10 minutes 225 g of pentane was added during the 100 degC plateau. Then the reactor was heated in 30 minutes to 115 degC. This temperature was maintained for 3 hours.

The reactor was cooled down to ambient temperature in 200 minutes and the product was recovered from the reactor. This experiment is identified as FPB460.

### Comparative example 4

At room temperature, in a stainless steel reactor, 13500 g of demineralised water was added to the reactor with 4500 g of recycled polystyrene granulate (D50 of 1.1 mm) containing 0.5 %wt. halogenated organic polymer Emerald 3000 (trademark, LANXESS) as flame-retardant (FR). An amount of 108 g of tricalcium phosphate was added and 1.6 g of Nacconol (trademark, Stepan Company). The reactor was stirred and heated to 100 degC in 2 hours and maintained at this temperature for 2 hours. In intervals of about 10 minutes 225 g of pentane was added during the 100 degC plateau. Then the reactor was heated in 20 minutes to 110 degC. This temperature was maintained for 4 hours.

The reactor was cooled down to ambient temperature in 200 minutes and the product was recovered from the reactor. This experiment is identified as FPB573.

### Example 1

At room temperature, in a stainless steel reactor, 13500 g of demineralised water was added to the reactor with 4500 g of recycled polystyrene granulate (D50 of 1.4 mm). An amount of 108 g of tricalcium phosphate was added and 1.6 g of Nacconol (trademark, Stepan Company). The reactor was stirred and heated to 100 degC in 2 hours and maintained at this temperature for 2 hours. In intervals of about 10 minutes 225 g of pentane was added during the 100 degC plateau. Then the reactor was heated in 45 minutes to 122 degC. This temperature was maintained for 4 hours.

The reactor was cooled down to ambient temperature in 200 minutes and the product was recovered from the reactor. This experiment is identified as FPB482.

### Example 2

At room temperature, in a stainless steel reactor, 13500 g of demineralised water was added to the reactor with 4500 g of recycled polystyrene granulate (D50 of 1.4 mm) containing 0.5 %wt. halogenated organic polymer Emerald 3000 (Trademark, LANXESS) as flame-retardant (FR). An amount of 108 g of tricalcium phosphate was added together with 1.6 g of Nacconol (trademark, Stepan Company). The reactor was stirred and heated to 100 degC in 2 hours and maintained at this temperature for 2 hours. In intervals of about 10 minutes 225 g of pentane was added during the 100 degC plateau. Then the reactor was heated in 45 minutes to 122 degC. This temperature was maintained for 4 hours.

The reactor was cooled down to ambient temperature in 200 minutes and the product was recovered from the reactor. This experiment is identified as FPB490.

The experimental results are shown in Table 1.

**Table 1: experimental results**

| Exp. dd. | recycled polystyrene beads | | Mw | number of dosages blowing agent | phase second isotherm | phase second isotherm | pentane content | foam structure |
|---|---|---|---|---|---|---|---|---|
| | D50 (mm) | FR (%.wt) | | | time (min) | Temp (degC) | %wt | |
| FPB460 | 3-4 | 0 | 25*10⁴ | 4 | 180 | 115 | 0.1 | no foam |
| FPB465 | 3-4 | 0 | 25*10⁴ | 11 | 180 | 115 | 3.4 | inhomogene |
| FPB477 | 3-4 | 0 | 25*10⁴ | 11 | 240 | 122 | 3.6 | inhomogene |
| FPB482 | 1.4 | 0 | 17*10⁴ | 11 | 240 | 122 | 3.9 | homogene |
| FPB490 | 1.4 | 0.5 | 16*10⁴ | 11 | 240 | 122 | 3.8 | homogene |
| FPB573 | 1.1 | 0.5 | 18*10⁴ | 11 | 240 | 110 | 2.7 | no foam |

From Table 1 it is clear that the foam structure of the expanded impregnated bead is affected by the size of that bead.

No good foam structure could be obtained if the D50 of the recycled polystyrene beads is in a range of 3-4 mm. In such embodiments the foam structure is of inhomogeneous structure.

No foam could be made when the temperature of the second isotherm was too low. The impregnation was insufficient (see FPB573) .

The foam structure was measured with an Euromex microscope. A cell size is considered homogenous when the sigma is less than 10% of the mean cell size. This was the case for both samples FPB482 as FPB490.

The Euromex microscope results for FPB482 as FPB490 are shown in Table 2.

**Table 2: measuring of foam structure**

| | FPB482 | FPB490 |
|---|---|---|
| | 117 | 91 |
| | 104 | 93 |
| | 97 | 100 |
| | 112 | 91 |
| Mean | 108 | 94 |
| Sigma | 9 | 4 |

Example 3 and Example 4

The same experimental steps as discussed in Example 1 were used, except that a mixture of recycled polystyrene beads and poly(p-phenylene oxide) was used (10 wt.%/90 wt.% PPO/PS). The experimental results are shown in Table 3 as FPB574 and FPB575.

From Table 3 it is clear that the foam structure of the expanded impregnated bead is affected by the height of the second phase isotherm. At a temperature of about 122 degC no foam could be obtained (FPB574), whereas a temperature of about 130 degC resulted in a homogeneous foam structure (FPB575).

**Table 3: experimental results**

| Exp. dd. | Mixture of recycled polystyrene beads (10/90 PPO/PS) | | Mw | number of dosages blowing agent | phase second isotherm | phase second isotherm | pentane content | foam structure |
|---|---|---|---|---|---|---|---|---|
| | D50 (mm) | FR (%.wt) | | | time (min) | Temp (degC) | %wt | |
| FPB574 | 1.6 | 0 | 19*10⁴ | 11 | 240 | 122 | 2.8 | no foam |
| FPB575 | 1.6 | 0 | 19*10⁴ | 11 | 240 | 130 | 3.6 | homogene |

## Claims

1. A method for preparing expandable polystyrene beads, wherein the method comprises the following steps:
a) providing recycled polystyrene granulates;
b) impregnating in an aqueous environment the granulates of step a) with a blowing agent in a suspension reactor, wherein the impregnation step is carried out in several phases, the phases comprising one or more warming up phases, isotherm phases and cooling down phases;
c) recovering the expandable recycled polystyrene beads from the reactor, wherein the recycled polystyrene granulates of step a) have a D50 (mm) in a range of 0,7 - 2 mm.

2. A method according to claim 1, wherein the blowing agent is supplied to the reactor during the isotherm phase.

3. A method according to claim 2, wherein the temperature range of the isotherm phase is in a range of 90 -130 degree Celsius.

4. A method according to any one or more of the preceding claims, wherein the impregnation step comprises a first warming up phase, followed by a first isotherm phase, followed by a second warming up phase, followed by a second isotherm phase and a cooling down phase.

5. A method according to claim 4, wherein the blowing agent is supplied to the reactor during the first isotherm phase and/or the second isotherm phase.

6. A method according to any one of claims 4-5, wherein the temperature range of the first isotherm phase is about 90 - 110 degree Celsius.

7. A method according to any one of claims 4-6, wherein the temperature range of the second isotherm phase is about 110 - 130 degree Celsius, wherein the temperature of the second isotherm phase is higher than the temperature of the first isotherm phase.

8. A method according to claims 1-3, wherein the impregnation step comprises a warming up phase, followed by an isotherm phase, and a cooling down phase.

9. A method according to claim 8, wherein the temperature range of the isotherm phase is in a range of 115 -125 degree Celsius.

10. A method according to any one or more of the preceding claims, wherein the impregnation step is carried out in the presence of one or more auxiliaries chosen from the group of surface active agents, antistatics, emulsion stabilizers, flame retardants and viscosity regulating agents.

11. A method according to any one or more of the preceding claims, wherein the recycled polystyrene granulates of step a) have a D50 (mm) in a range of 1,0 - 1,8 mm.

12. A method according to any one or more of the preceding claims, wherein the recycled polystyrene granulates of step a) have a Mw in a range of 15-25×10⁴ g/mol.

13. Expandable recycled polystyrene beads obtained according to a method according to any one or more of the preceding claims, the expandable recycled polystyrene beads having a ratio LID (length/diameter) of < 0,98, in particular < 0,96.

14. The use of expandable recycled polystyrene beads obtained according to a method according to any one or more of the claims 1-12 or expandable recycled polystyrene beads according to claim 13 in a moulding process for manufacturing a polystyrene foam structure.

15. Polystyrene foam structure comprising expanded recycled polystyrene beads obtained according to a method according to any one or more of the claims 1-12 or expandable recycled polystyrene beads according to claim 13.
